# EUROPEAN PATENT APPLICATION

(11) **EP 2 620 937 A2**
(43) Date of publication of application: **31.07.2013**
(21) Application number: 12188207.0
(22) Date of filing: 11.10.2012
(51) Int. Cl.: G09G 5/00, G06F 3/14

(54) **Signal Processing Apparatus, Display Apparatus, Display System, Method for Processing Signal, and Method for Processing Audio Signal**

(30) Priority: 27.01.2012 KR 20120008616; 27.01.2012 KR 20120008615; 30.01.2012 KR 20120009268; 20.04.2012 KR 20120041614
(71) Applicant: Samsung Electronics Co., Ltd., Suwon-si, Gyeonggi-do, 443-742 (KR)
(72) Inventor: Song, Young-suk, Gyeonggi-do (KR); Jung, Choon-sik, Gyeonggi-do (KR); Hahm, Cheul-hee, Gyeonggi-do (KR); Kang, Hee-beom, Gyeonggi-do (KR); Lee, Tae-young, Gyeonggi-do (KR); Min, Suk-in, Gyeonggi-do (KR); Lee, Tae-hyung, Seoul (KR); Kim, Hyeong-gil, Gyeonggi-do (KR)
(74) Representative: Davies, Robert Ean

(57) **Abstract**

A display system is provided. The display system includes a display apparatus which displays an image and comprises a media access control (MAC) device to access a communication network, and a communication interface apparatus which comprises a physical layer device to connect the MAC device of the display apparatus to the communication network. The display apparatus and the communication interface apparatus exchange a signal between the physical layer device and the MAC device through a serial interface.

## Description

### CROSS-REFERENCE TO RELATED APPLICATIONS

This application claims priority from Korean Patent Application Nos. 2012-0008615 filed on January 27, 2012, 2012-0008616 filed on January 27, 2012, and 2012-0009268 filed on January 30, 2012, and 2012-0041614 filed on April 20, 2012, in the Korean Intellectual Property Office, the disclosures of which are incorporated herein by reference.

### BACKGROUND

### 1. Field

Methods and apparatuses consistent with exemplary embodiments relate a signal processing apparatus, a display apparatus, a display system, a method for processing signals, and a method for processing an audio signal, and more particularly, to a signal processing apparatus, a display apparatus, a display system, a method for processing signals, and a method for processing an audio signal, which can exchange signals between a physical layer (PHY) and a media access control (MAC) for connecting a network through a single cable.

### 2. Description of the Related Art

A display apparatus is an apparatus that processes digital or analogue video signals received from an external source or various video signals stored in an internal storage device as compressed files of various formats, and displays the signals.

Such display apparatus employs various input and output ports to receive various signals from external sources, and recently employs a local area network (LAN) port to access the Internet.

However, such input and output ports cause difficulties in reducing the size and weight of the display apparatus, and thus a method for processing signals input and output from the input and output ports of the display apparatus through an external apparatus is required.

In particular, a single display set or apparatus uses an audio signal of an integrated interchip sound (I2S) standard (hereinafter, referred to as an "I2S" signal) to transmit audio information. In order to transmit the I2S signal to another apparatus, the apparatus should use a separate cable. Specifically, when converting an audio signal of an I2S format into a Sony/Philips digital interconnect format (SPDIF) signal or an analogue audio signal and transmitting the converted signal, the display apparatus should use a dedicated SPDIF cable or an analogue audio cable.

However, when the display apparatus transmits data to an external apparatus, it should transmit video signals or control signals along with the I2S signal. Therefore, the number of cables increases and it is difficult to manage the design of the exterior of the display apparatus.

To solve these problems, a method in which a plurality of signals (for example, an audio signal, a video signal, and a control signal) can be transmitted through a single cable using a serial interface has been suggested.

However, if the I2S signal is transmitted to an external apparatus using a serial interface, a plurality of clock signals included in the I2S signal are not synchronized because of a clock frequency of the serial interface, and thus jitter occurs in the I2S signal. Therefore, there is a problem in that the quality of the output sound deteriorates.

Also, thanks to the advancement of electronic technologies, information is rapidly digitalized, and, with the development of multimedia apparatuses, video image compressing technologies are highlighted. The moving picture experts group (MPEG) created in this technical background set an international standard for compression and encoding of digital moving images, which is the core technology of the multimedia environment.

Multimedia apparatuses receiving and processing transport stream packets according to the MPEG standard detect a bit rate for the transport stream packet and perform signal-processing such as decoding with respect to the transport stream packet using the detected bit rate.

However, if a tuner which receives the transport stream packet and a decoder which decodes the transport stream packet are realized by separate chips, the bit rate for the transport stream packet may not be detected accurately.

In particular, if the tuner transmits the transport stream packet to the decoder through a high speed data interface and the tuner and the decoder use different system time clocks, there is a problem that the bit rate for the transport stream packet cannot be exactly detected.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a signal processing apparatus, a display apparatus, a display system, and a method for processing signals, which can exchange signals between a physical layer and a MAC through a single cable.

One or more exemplary embodiments also provide a signal processing apparatus and a method for processing signals thereof, and a display system, which provide a plurality of data using a single cable and output an audio signal from which a jitter component is removed.

One or more exemplary embodiments also provide a signal processing apparatus and a method for processing signals using the same, which can process a transport stream packet normally.

According to an aspect of an exemplary embodiment, there is provided a signal processing apparatus which is connectible to a display apparatus, the signal processing apparatus including: a physical layer device which is connected to an external network, serial interface which connects the physical layer device and the display apparatus, and a converter which convert a signal to be transmitted from the physical layer device to a medium access control (MAC) device of the display apparatus and provides the signal to the serial interface, and converts a signal received through the serial interface and provides the signal to the physical layer device.

The converter may convert a signal to be transmitted from the physical layer device to the MAC device of the display apparatus, may temporarily store the converted signal in a buffer of a predetermined size, and may provide the temporarily stored signal to the MAC device through the serial interface.

The serial interface may multiplex the signal temporarily stored in the buffer of the converter using a high speed clock signal which is faster than a clock signal of a reduced media independent interface (RMII) signal, and may transmit the multiplexed signal to the display apparatus.

The physical layer device may transmit two reception data signals, a Carrier Sense _ Data Valid (CRS_DV) signal, and a Reduced Media Independent Interface _ Management Data (RMII_MD) signal to the MAC device, and may receive two transmission data signals, a Reduced Media Independent Interface _ Management Data Clock (RMII_MDC) signal, and a Reduced Management Interface _ Management Data (RMII_MD) signal, and a Transmit Enable Signal (TXEN) signal from the MAC device.

The converter may include a plurality of transmission First In _ First Out (FIFO) buffers and may store the two reception data signals in the plurality of transmission FIFO buffers in a unit of a size of the transmission FIFO buffer, and the serial interface may extract data of the FIFO buffer that has stored the two reception data signals using a high speed clock signal which is faster than a clock signal of an RMII signal.

The converter may store the two reception data signals in the transmission FIFO buffer only in an on-section of the CRS_DV signal.

The converter may divide the RMII_MD signal into an RMII_MDi signal to be transmitted to the MAC device and an RMII_MDo signal to be received from the MAC device, and may provide the RMII_MDI signal to the serial interface.

The converter may include a plurality of reception FIFO buffers, and the serial interface may store a serial signal corresponding to the two transmission data signals in the plurality of reception FIFO buffers in a unit of a size of the reception FIFO buffer. The converter may recover the two transmission data signals based on data stored in the reception FIFO buffer, a clock signal of the RMII signal, and the TXEN signal, and may provide the two recovered transmission data signals to the physical layer device.

If a serial signal corresponding to the RMII_MDo signal is received, the converter may provide the received serial signal to the physical layer device as the RMII_MD signal.

The signal processing apparatus may further include a signal inputter and outputter which inputs and outputs at least one of a video signal, an audio signal, and a control signal to be input and output from an external apparatus to the display apparatus, and the serial interface may provide at least one of the video signal, the audio signal, and the control signal to the display apparatus.

According to an aspect of another exemplary embodiment, there is provided a signal processing apparatus which is connectible to a display apparatus, the signal processing apparatus including: a serial interface which receives a plurality of data from the display apparatus and converts audio data of the plurality of data received into an audio signal including a plurality of clock signals; and an audio signal jitter remover which generates a new master clock signal (MCLK) using the plurality of clock signals included in the converted audio signal, outputs the audio signal according to the new master clock signal, and removes jitter of the audio signal.

The new master clock signal may be synchronized with other signals except for a master clock signal from among the plurality of clock signals included in the audio signal.

The audio signal jitter remover may generate the new master clock signal by changing at least one of a period and a phase of the master clock signal included in the plurality of clock signals.

The audio signal jitter remover may include: at least one buffer which temporarily stores other clock signals except for a master clock signal from among the plurality of clock signals, a control signal generator which generates a control signal to generate the new master clock signal having a frequency synchronized with a frequency of the other clock signals, and a clock signal generator which generates the new master clock signal according to the control signal.

The serial interface may convert audio data of the plurality of data received from the display apparatus into an audio signal of an integrated interchip sound (I2S) standard, and may output the audio signal to the audio signal jitter remover.

The audio signal of the I2S standard may include a bit clock (BLK) signal, a left right clock (LRCLK) signal, a sound data (S_Data) signal, and a master clock (MCLK) signal, and the audio signal jitter remover may temporarily store the BLK signal, the LRCLK signal, the S_Data signal in a buffer, may generate the new master clock signal having a frequency synchronized with a frequency of the BLK signal and the LRCLK signal, and may output the BLK signal, the LRCLK signal, and the S_Data signal according to the new master clock signal.

The plurality of data may include audio data, video data, control data, and additional data, and the serial interface may receive the plurality of data using a single cable.

According to an aspect of still another exemplary embodiment, there is provided a display apparatus which is connectible to a signal processing apparatus including a physical layer device connected to an external network, the display apparatus including: a MAC device which is connected to an external network using the physical layer device, a serial interface which connects the MAC device and the signal processing apparatus, and a converter which converts a signal to be transmitted from the MAC device to the physical layer device of the signal processing apparatus and provides the signal to the serial interface, and converts a signal received through the serial interface and provides the signal to the MAC device.

The converter may convert a signal to be transmitted from the MAC device to the physical layer device of the signal processing apparatus, may temporarily store the converted signal in a buffer of a predetermined size, and may provide the temporarily stored signal to the physical layer device through the serial interface.

The serial interface may multiplex the signal temporarily stored in the buffer of the converter using a high speed clock signal which is faster than a clock signal of an RMII signal, and may provide the multiplexed signal to the signal processing apparatus.

The MAC device may transmit two transmission data signals, an RMII_MDC signal, an RMII_MD signal, and a TXEN signal to the physical layer device, and may receive two reception data signals, a CRS_DV signal, and an RMII_MD signal from the physical layer device.

The converter may include a plurality of transmission FIFO buffers and store the two transmission data signals in the plurality of transmission FIFO buffers in a unit of a size of the transmission FIFO buffer, and the serial interface may extract data of the FIFO buffer that has stored the two transmission data signals using a high speed clock signal which is faster than a clock signal of an RMII signal.

The converter may store the two transmission data signals in the transmission FIFO buffer only in an on-section of the TXEN signal.

The converter may divide the RMII_MD signal into an RMII_MDo signal to be transmitted to the physical layer device and an RMII_MDi signal to be received from the physical layer device, and may provide the RMII_MDo signal to the serial interface.

The converter may include a plurality of reception FIFO buffers, and the serial interface may store a serial signal corresponding to the two reception data signals in the plurality of reception FIFO buffers in a unit of a size of the reception FIFO buffer. The converter may recover the two reception data signals based on data stored in the reception FIFO buffers, the RMII clock signal, and the CRS_DV signal, and may provide the recovered signals to the MAC device.

If a serial signal corresponding to the RMII_MDi signal is received, the converter may provide the received serial signal to the MAC device as the RMII_MD signal.

The display apparatus may further include a signal inputter and outputter which inputs and outputs at least one of a video signal, an audio signal, and a control signal to be input and output to the display apparatus, and the serial interface may provide at least one of the video signal, the audio signal, and the control signal to the signal processing apparatus.

According to an aspect of still another exemplary embodiment, there is provided a display apparatus including: a first signal processor which generates time information for each of transport stream packets using a system time clock, and transmits a transport stream packet into which the generated time information is inserted and the system time clock, and a second signal processor which receives the transport stream packet into which the time information is inserted and the system time clock, and processes the transport stream packet.

The first signal processor may include: a receptor which receives the transport stream packets, a storage which stores the received transport stream packets in sequence, a controller which controls to generate time information for each of the transport stream packets using a system time clock, inserts the generated time information into a corresponding transport stream packet, and stores the transport stream packet, and a transmitter which transmits the transport stream packet into which the time information is inserted and the system time clock to the second signal processor.

The system time clock may be a system time clock that has been corrected based on program clock reference (PCR) information included in the transport stream packet.

The first signal processor may transmit the transport stream packet into which the time information is inserted and the system time clock to the second processor through a high speed data interface.

The second signal processor may include: a receptor which receives the transport stream packet into which the time information is inserted and the system time clock, a storage which stores the received transport stream packets in sequence, and a controller which detects bit rate information on the transport stream packet using the time information inserted into the transport stream packet and the system time clock.

According to an aspect of still another exemplary embodiment, there is provided a display system including: a display apparatus which displays an image and includes a MAC device to access a communication network, and a communication interface apparatus which includes a physical layer device to connect the MAC device of the display apparatus to the communication network, wherein the display apparatus and the communication interface apparatus exchange a signal between the physical layer device and the MAC device through a serial interface.

The signal between the physical layer device and the MAC device may be an RMII signal.

According to an aspect of still another exemplary embodiment, there is provided a method for processing signals between a physical layer and a MAC to access a communication network of a display apparatus, the method including: converting a plurality of signals to be transmitted from the physical layer to the MAC into a single serial signal, transmitting the converted serial signal to a serial interface, de-multiplexing the transmitted serial signal into a plurality of signals, and providing the plurality of signals de-multiplexed to the MAC.

The plurality of signals to be transmitted from the physical layer to the MAC may be two reception data signals, a CRS_DV signal, and an RMII_MD signal of the RMII signal.

The converting may include temporarily storing the plurality of signals in a buffer and converting the plurality of signals temporarily stored in the buffer into a single serial signal by multiplexing the plurality of signals using a high speed clock signal which is faster than a clock signal of the RMII signal.

The MAC may be provided in the display apparatus, and the physical layer may be provided in an apparatus which is separated from the display apparatus.

According to an aspect of still another exemplary embodiment, there is provided a method for processing signals between a physical layer and a MAC to access a communication network of a display apparatus, the method including: converting a plurality of signals to be transmitted from MAC to the physical layer into a single serial signal, transmitting the converted serial signal to a serial interface, de-multiplexing the transmitted serial signal into a plurality of signals, and providing the plurality of signals de-multiplexed to the physical layer.

The plurality of signals to be transmitted from the MAC to the physical layer may be two transmission data signals, an RMII_MDC signal, an RMII_MD signal, and a TXEN signal of an RMII signal.

The converting may include temporarily storing the plurality of signals in a buffer and converting the plurality of signals temporarily stored in the buffer into a single serial signal by multiplexing the plurality of signals using a high speed clock signal which is faster than a clock signal of an RMII signal.

The MAC may be provided in the display apparatus, and the physical layer may be provided in an apparatus which is separated from the display apparatus.

According to an aspect of still another exemplary embodiment, there is provided a method for processing an audio signal of a signal processing apparatus which is connectible to a display apparatus, the method including: receiving a plurality of data from the display apparatus, converting audio data of the plurality of data received into an audio signal including a plurality of clock signals, generating a new master clock signal (MCLK) using the plurality of clock signals included in the converted audio signal to remove jitter of the audio signal, and outputting the audio signal according to the new master clock signal.

The new master clock signal may be synchronized with other signals except for a master clock signal from among the plurality of clock signals included in the audio signal.

The generating may include generating the new master clock signal by changing at least one of a period and a phase of the master clock signal included in the plurality of clock signals.

The generating may include: temporarily storing other clock signals except for a master clock signal from among the plurality of clock signals, generating a control signal to generate the new master clock signal having a frequency synchronized with a frequency of the other clock signals, and generating the new master clock signal according to the control signal.

The converting may include converting the audio data of the plurality of data received from the display apparatus into an audio signal of an I2S standard.

The audio signal of the I2S standard may include a BLK signal, a LRCLK signal, an S_Data signal, and an MCLK signal, and the generating may include temporarily storing the BLK signal, the LRCLK signal, and the S_Data signal in a buffer, and generating the new master clock signal having a frequency synchronized with a frequency of the BLK signal and the LRCLK signal. The outputting may include outputting the BLK signal, the LRCLK signal, and the S_Data signal according to the new master clock signal.

The plurality of data may include audio data, video data, control data, and additional data, and the receiving may include receiving the plurality of data from the display apparatus using a single cable line.

According to an aspect of still another exemplary embodiment, there is provided a display system including: a display apparatus which transmits a plurality of data to a serial interface, and a signal processing apparatus which converts the plurality of data transmitted from the serial interface into an audio signal including a plurality of clock signals, generates a new master clock signal (MCLK) using the plurality of clock signals included in the converted audio signal, outputs the audio signal according to the new master clock signal, and removes jitter of the audio signal.

According to the various exemplary embodiments described above, since the plurality of data such as audio data, video data, and control data can be transmitted through a single cable, it is easy to manage the design of the exterior of the display apparatus, and, since the jitter component of the audio signal is removed, sound quality does not deteriorate.

According to an aspect of still another exemplary embodiment, there is provided a method for processing a transport stream packet of a display apparatus which includes a first signal processor and a second signal processor, the method including: generating, by the first signal processor, time information for each of transport stream packets using a system time clock, and transmitting a transport stream packet into which the generated time information is inserted and the system time clock, and receiving, by the second signal processor, the transport stream packet into which the time information is inserted and the system time clock, and processing the transport stream packet.

The transmitting may include: receiving the transport stream packets, storing the received transport stream packets in sequence, and transmitting the transport stream packet into which the time information is inserted and the system time clock to the second signal processor, and the storing may include generating time information for each of the transport stream packets using a system time clock, inserting the generated time information into a corresponding transport stream packet, and storing the transport stream packet.

The system time clock may be a system time clock that has been corrected based on program clock reference (PCR) information included in the transport stream packet.

The transmitting may include transmitting the transport stream packet into which the time information is inserted and the system time clock to the second signal processor through a high speed data interface.

The processing may include: receiving the transport stream packet into which the time information is inserted and the system time clock, storing the received transport stream packets in sequence, and detecting bit rate information on the transport stream packet using the time information included in the stored transport stream packet and the system time clock.

According to the various exemplary embodiments described above, the second signal processor can detect the bit rate information on the transport stream packet using the transport stream packet into which the time information is inserted and the system time clock received from the first signal processor. Accordingly, even if the bit rate of the transport stream packet is changed due to the high speed data interface, the bit rate on the transport stream packet before being converted can be detected.

### BRIEF DESCRIPTION OF THE DRAWING FIGURES

The above and/or other aspects will be more apparent by describing in detail exemplary embodiments, with reference to the accompanying drawings, in which:

FIG. 1 is a block diagram illustrating a display system according to an exemplary embodiment;

FIG. 2 is a block diagram illustrating a signal processing apparatus and a communication interface according to a first exemplary embodiment;

FIG. 3 is a block diagram illustrating a signal processing apparatus and a communication interface according to a second exemplary embodiment;

FIG. 4 is a block diagram illustrating the display apparatus of FIG. 1 in detail;

FIG. 5 is a view to explain a signal processing operation of the signal processing apparatus and the communication interface according to the first exemplary embodiment;

FIG. 6 is a view to explain an operation of processing an RX signal of an RMII;

FIG. 7 is a view to explain an operation of processing a TX signal of an RMII;

FIG. 8 is a view to explain an operation of processing an RMII_MD signal of an RMII;

FIG. 9 is a block diagram illustrating a signal processing apparatus according to a third exemplary embodiment;

FIG. 10 is a block diagram illustrating the signal processing apparatus according to the third exemplary embodiment in detail;

FIG. 11 is a block diagram illustrating a display apparatus according to another exemplary embodiment;

FIG. 12 is a block diagram illustrating a first signal processor of the display apparatus of FIG. 11;

FIG. 13 is a block diagram illustrating a second signal processor of the display apparatus of FIG. 11;

FIG. 14 is a flowchart illustrating a method for processing signals according to a first exemplary embodiment;

FIG. 15 is a flowchart illustrating a method for processing signals according to a second exemplary embodiment;

FIG. 16 is a flowchart illustrating a method for processing an audio signal according to a third exemplary embodiment; and

FIG. 17 is a flowchart illustrating a method for processing a transport stream packet according to a fourth exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

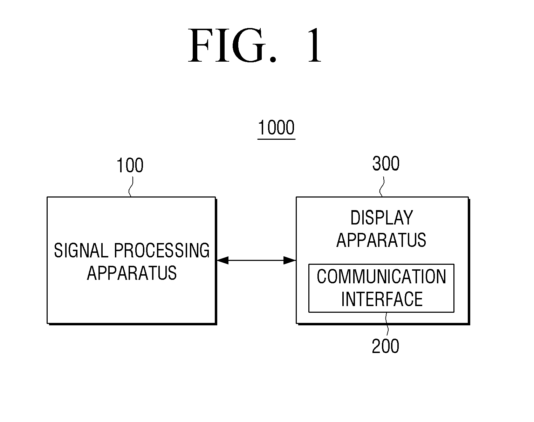

FIG. 1 is a block diagram illustrating a display system according to an exemplary embodiment.

Referring to FIG. 1, a display system 1000 according to an exemplary embodiment includes a signal processing apparatus 100 and a display apparatus 300.

The signal processing apparatus 100 is adapted to connect the display apparatus 300 to an external apparatus. Specifically, the signal processing apparatus 100 may transmit data received from an external apparatus to the display apparatus 300 in a serial communication method, and may transmit data received from the display apparatus 300 in the serial communication method to an external apparatus (not shown). The serial communication method recited herein refers to existing serial communication methods such as a universal serial bus (USB), I²C, and IEEE 1394, and also refers to a future serial communication method. At this time, a signal exchanged may be a video signal, an audio signal, a control signal, and a reduced media independent interface (RMII) signal, which is a medium interface standard between a physical layer (PHY) and a media access control (MAC).

A plurality of data exchanged in the serial communication method may include audio data, video data, control data, and additional data.

Specifically, the display apparatus 300 converts an audio signal of an I2S standard including audio data (hereinafter, referred to as an "I2S signal") into a signal of a serial communication method in order to transmit the I2S signal to the signal processing apparatus 100. The I2S signal includes a master clock (MLCK), a bit clock (BCLK), a left right clock (LRCLK), and sound data (S_DATA).

The signal processing apparatus 100 may be connected to a communication network. Specifically, the signal processing apparatus 100 may include a physical layer (PHY) to physically access the communication network (specifically, a local area network), and may transmit data received from the communication network to the display apparatus 300 in the serial communication method, and may transmit data received from a MAC of the display apparatus 300 in the serial communication method to the communication network through the physical layer (PHY).

If audio data, video data, and control data are received from the display apparatus 300, the signal processing apparatus 100 converts the audio data back into the I2S signal.

The signal processing apparatus 100 generates a new master clock signal using a plurality of clock signals included in the converted I2S signal in order to remove a jitter component of the audio signal.

Specifically, when the I2S signal is transmitted in the serial communication method, the master clock signal included in the converted I2S signal includes a jitter component due to a phase difference between the master clock signal and a clock signal of a serial interface. Therefore, the master clock signal included in the converted I2S signal is not synchronized with the other clock signals included in the I2S signal and thus sound quality deteriorates.

In order to remove the jitter component of the audio signal, the signal processing apparatus 100 stores other clock signals except for the master clock signal in a buffer and generates a new master clock signal using the master clock signal and the other clock signals. At this time, the signal processing apparatus 100 generates the new master clock signal so that a frequency of the new master clock signal can be synchronized with frequencies of the other clock signals.

The signal processing apparatus 100 outputs an audio signal including a plurality of clock signals and a plurality of audio data signals according to the new master clock signal.

The display apparatus 300 displays an image and includes a communication interface 200 to connect the display apparatus 300 to an external apparatus. The display apparatus 300 may be, but not limited to, a television (TV), a projection TV, a monitor, a mobile phone, or a personal digital assistance (PDA).

The communication interface 200 may exchange signals with the signal processing apparatus 100 in the serial communication method, and may be connected to an external apparatus and a communication network through the signal processing apparatus 100. Specifically, the communication interface 200 may recover a signal of a serial communication method received from the signal processing apparatus 100 and provide the signal to inner elements of the display apparatus 300, and may transmit data to be transmitted from the inner elements of the display apparatus 300 to an external apparatus to the signal processing apparatus 100 in the serial communication method.

The communication interface 200 may include a MAC to access the PHY, and may receive a signal to be transmitted to the MAC from the signal processing apparatus 100 in the serial communication method. The communication interface 200 may transmit a signal to be transmitted from the MAC to the signal processing apparatus 100 to the signal processing apparatus 100 in the serial communication method.

Since a plurality of data such as audio data, video data, and control data are transmitted through a single cable in the display system 1000 as described above, a user can easily manage the design of the exterior of the display system 1000. Also, since the jitter component of the audio signal is removed, deterioration of sound quality can be prevented.

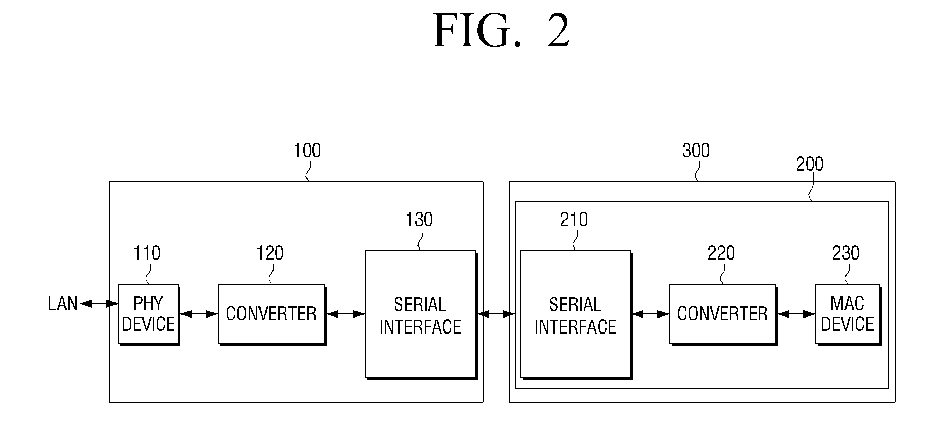

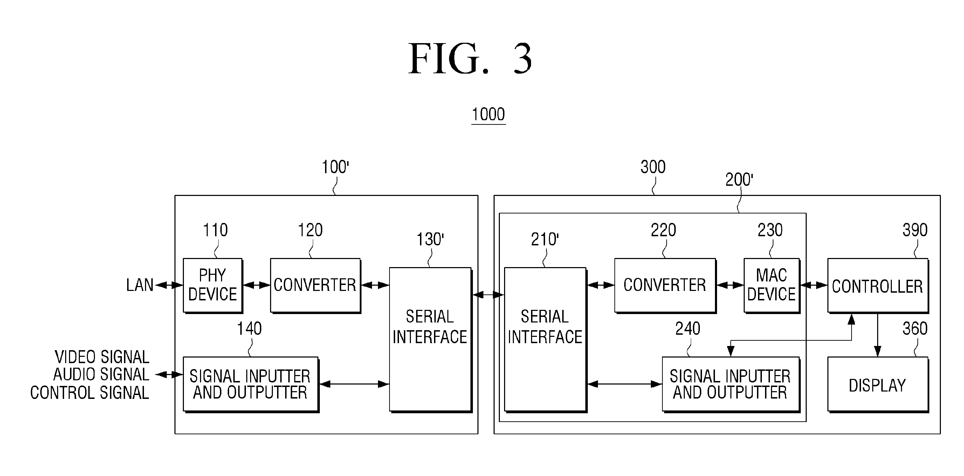

Hereinafter, detailed constitution and operation of the signal processing apparatus 100 and the communication interface 200 will be explained with reference to FIGS. 2 and 3.

First, a signal processing apparatus and a communication interface according to a first exemplary embodiment will be explained with reference to FIG. 2.

Referring to FIG. 2, the signal processing apparatus 100 includes a physical layer (PHY) device 110, a converter 120, and a serial interface 130.

The PHY device 110 is connected to an external communication network. Specifically, the PHY device 110, which corresponds to a physical layer of a LAN protocol, changes a signal received from a MAC device 230 of a communication interface 200 to a differential signal in a Manchester coding method to transmit the signal to the communication network, and changes a differential signal received through the communication network to a signal that is recognizable by the MAC device 230. The PHY device 110 may be realized by a single chip (for example, a PHY chip).

The PHY device 110 communicates with the MAC device 230 in an RMII interface method according to the Ethernet standard (IEEE 802.3u), and transmits a clock signal, a CRS_DV signal, and a reception data signal (RX[1:0]) to the MAC device 230, receives an RMII_MDC signal, a TXEN signal, and a transmission data signal (TX[1:0]) from the MAC device 230, and exchanges an RMII_MD signal with the MAC device 230.

9 pins are required to connect a PHY and a MAC in the RMII interface method as described above. However, the MAC is provided in the display apparatus 300 and the PHY is provided in the signal processing apparatus 100, which is separated from the display apparatus 300, in the present exemplary embodiment. Therefore, if the PHY and the MAC communicate with each other only in the RMII interface method, stability of signals cannot be guaranteed and the 9 pins connected to the external apparatus may incur extra expense.

Therefore, the signal processing apparatus 100 according to the present exemplary embodiment converts the RMII signals, which are input and output signals of the PHY device 110, into serial signals using the converter 120 and the serial interface 130, which will be described later, and transmits the converted serial signals to the display apparatus 300.

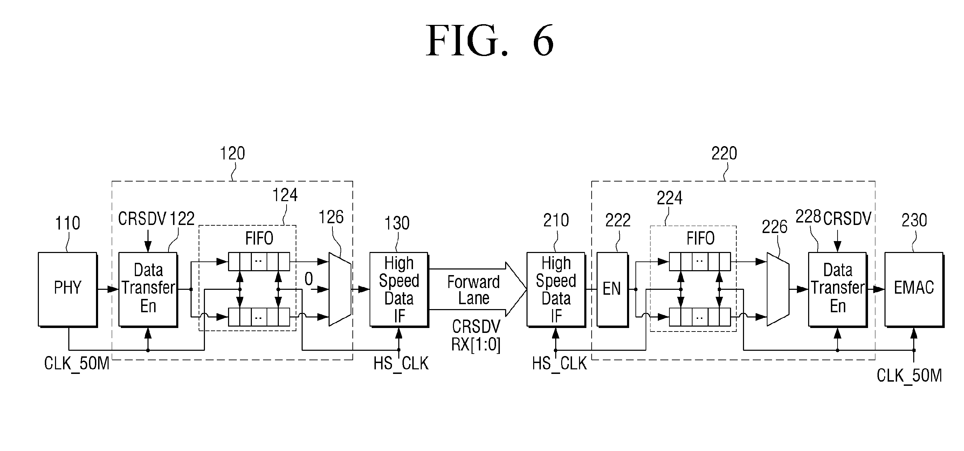

However, since a clock signal in the RMII signal has a high speed clock signal of 50 MHz, it is difficult to deal with the clock signal of the RMII signal as data and transmit the clock signal. Therefore, in the present exemplary embodiment, the clock signal of the RMII signal is not transmitted, and instead, the communication interface 200 of the display apparatus 300, which will be described later, generates a clock signal corresponding to the clock signal of the RMII signal and provides the clock signal to the MAC. Since the clock signal of the RMII signal is not directly transmitted to the MAC device 230 as described above, the converters 120 and 220 perform a signal converting operation to prevent async of the signal being transmitted. A signal processing operation for 8 signals (RMII_MDC, RMII_MD, TXEN, CRS_VD, RX[1:0], and TX[1:0] in the RMII signal will be explained below with reference to FIGS. 6 to 8.

The converter 120 converts a signal to be transmitted and provides the converted signal to the serial interface 130. Specifically, the converter 120 may convert a signal to be transmitted from the PHY device 110 to the MAC device 230 of the display apparatus 300 (specifically, the reception data signal (RX[1:0], the CRS_DV signal, and the RMII_MD signal from among the RMII signals), temporarily store the converted signal in a buffer of a predetermined size, and provide the signal temporarily stored to the serial interface 210 through the serial interface 130.

The converter 120 may temporarily store a plurality of signals received from the serial interface 130 (specifically, the transmission data signal (TX[1:0]), the RMII_MDC signal, the RMII_MD signal, and the TXEN signal of the RMII signal) in the buffer of the predetermined size, and may transmit the signals temporarily stored to the PHY device 110.

The serial interface 130 connects the PHY device 110 to the display apparatus 300. Specifically, the serial interface 130 may multiplex the signal temporarily stored in the buffer of the converter 120 using a high speed clock signal which is faster than the clock signal of the RMII signal, and may transmit the multiplexed signal to the display apparatus 300. The high speed clock signal may have a frequency higher than 100 MHz.

The serial interface 130 may de-multiplex a serial signal received from the display apparatus 300 using a high speed clock signal which is faster than the clock signal of the RMII signal, and provides the plurality of signals de-multiplexed to the converter 120.

The communication interface 200 includes the serial interface 210, the converter 220, and the MAC device 230.

The serial interface 210 connects the MAC device 230 to the signal processing apparatus 100. Specifically, the serial interface 210 may multiplex a signal temporarily stored in a buffer of the converter 220 using a high speed clock signal which is faster than the clock signal of the RMII signal, and may transmit the multiplexed signal to the signal processing apparatus 100. The high speed clock signal may have a frequency higher than 100 MHz.

The serial interface 210 may de-multiplex the serial signal received from the signal processing apparatus 100 using a high speed clock signal which is faster than the clock signal of the RMII signal and may provide the plurality of signals de-multiplexed to the converter 220.

The converter 220 converts a signal to be transmitted to the signal processing apparatus 100 and provides the converted signal to the serial interface 210. Specifically, the converter 220 may convert a signal to be transmitted from the MAC device 230 to the PHY device 110 of the signal processing apparatus 100 (specifically, the transmission data signal (TX[1:0]), the RMII_MDC signal, the RMII_MD signal, and the TXEN signal of the RMII signal), store the converted signal in a buffer of a predetermined size, and provide the signal temporarily stored to the PHY device 110 of the signal processing apparatus 100 through the serial interface 210.

The converter 220 may temporarily store a plurality of signals received from the serial interface 210 (specifically, the reception data signal (RX[1:0]), the CRS_DV signal, and the RMII_MD signal of the RMII signal) in the buffer of the predetermined size, and may transmit the signal temporarily stored to the MAC device 230.

The converter 220 may generate a clock signal having the same frequency as that of the clock signal of the RMII signal and transmit the clock signal to the MAC device 230. The clock signal generated by the converter 220 may be used in the signal recovering process of the converter 220 described above.

The MAC device 230 is connected to an external network using the PHY device 110. Specifically, the MAC device 230 corresponds to a data link layer of a LAN protocol and performs media access control to access the external network. The MAC device 230 may be realized by a single chip. Although the MAC device 230 is an inner element of the communication interface 200 in the present exemplary embodiment, the function of the MAC device 230 may be performed by a controller 390 of the display apparatus 300, which will be described later.

Since the MAC device 230 communicates with the PHY device 110 in the RMII interface method according to the Ethernet standard (IEEE 802.3u), the MAC device 230 receives the clock signal, the CRS_DV signal, and the reception data signal (RX[1:0]) from the PHY device 110, transmits the RMII_MDC signal, the TXEN signal, and the transmission data signal (TX[1:0]) to the PHY device 110, and exchanges the RMII_MD signal with the PHY device 110.

Since the signal processing apparatus 100 and the display apparatus 300 exchange the RMII signal with each other in the serial communication method as described above, the RMII signal can be exchanged easily using a single cable.

Although the signal processing apparatus 100 and the display apparatus 300 exchange only the RMII signal with each other in the above exemplary embodiment, the signal processing apparatus 100 and the display apparatus 300 may exchange a video signal, an audio signal and a control signal, which are exchanged with an external apparatus, besides the RMII signal, in the serial communication method. This will be explained below with reference to FIG. 3.

FIG. 3 is a block diagram illustrating a signal processing apparatus and a communication interface according to a second exemplary embodiment.

Referring to FIG. 3, a signal processing apparatus 100' includes a physical layer (PHY) device 110, a converter 120, a serial interface 130', and a signal inputter and outputter 140.

The operations of the PHY device 110 and the converter 120 are the same as those described in FIG 2 and thus an overlapped explanation thereof is omitted.

The signal inputter and outputter 140 inputs and outputs at least one of a video signal, an audio signal, and a control signal to be input to and output from an external apparatus from and to the display apparatus 300. The signal inputter and outputter 140 includes a terminal such as various AV terminals, a coaxial cable terminal, a USB, and an HDMI, and transmits a signal received from each terminal to the serial interface 130'. The signal inputter and outputter 140 may output a signal received from the serial interface 130' to a terminal corresponding to the signal.

The serial interface 130' may transmit a signal to be transmitted from the PHY device 110 to the MAC device 230 of the display apparatus 300 and a signal received from the signal inputter and outputter 140 to the display apparatus 300 in the serial communication method.

The serial interface 130' may de-multiplex a serial signal received from the display apparatus 300 into a plurality of signals, and may provide a signal that is related to the RMII from among the plurality of signals de-multiplexed to the converter 120 and provide a video signal, an audio signal, and a control signal to the signal inputter and outputter 140.

The display apparatus 300 may include a communication interface 200', a display 360, and a controller 390.

The display 360 displays an image. Specifically, the display 360 may display an image received through the communication interface 200'.

The controller 390 controls the elements of the display apparatus 300. Specifically, if a video signal is received through the communication interface 200', the controller 390 may control the display 360 to display an image corresponding to the received video signal.

The communication interface 200' may include a serial interface 210', a converter 220, a MAC device 230, and a signal inputter and outputter 240.

The operations of the converter 220 and the MAC device 230 are the same as those of FIG. 2 and thus an overlapped explanation thereof is omitted.

The serial interface 210' may transmit a signal to be transmitted from the MAC device 230 to the PHY device 110 of the signal processing apparatus 100' and a signal received from the signal inputter and outputter 240 (that is, a signal to be transmitted to an external apparatus) to the signal processing apparatus 100' in the serial communication method.

The serial interface 210' may de-multiplex a serial signal received from the signal processing apparatus 100' into a plurality of signals, and may provide a signal that is related to the RMII from among the plurality of signals de-multiplexed to the converter 220 and provide a video signal, an audio signal, and a control signal to the signal inputter and outputter 240.

The signal inputter and outputter 240 inputs and outputs at least one of the video signal, the audio signal, and the control signal to input to and output from the display apparatus 300. Specifically, the signal inputter and outputter 240 may provide a video signal, an audio signal, and a control signal of an external apparatus (not shown) received through the signal processing apparatus 100' to the controller 390, and may output a video signal, an audio signal, and a control signal to be output to the external apparatus to the serial interface 210'.

The signal processing apparatus 100' and the display apparatus 300 according to the exemplary embodiment described above exchange the video signal, the audio signal, and the control signal, which are exchanged with the external apparatus, besides the RMII signal, with each other in the serial communication method. Therefore, the RMII signal, the video signal, the audio signal, and the control signal can be exchanged easily through a single cable.

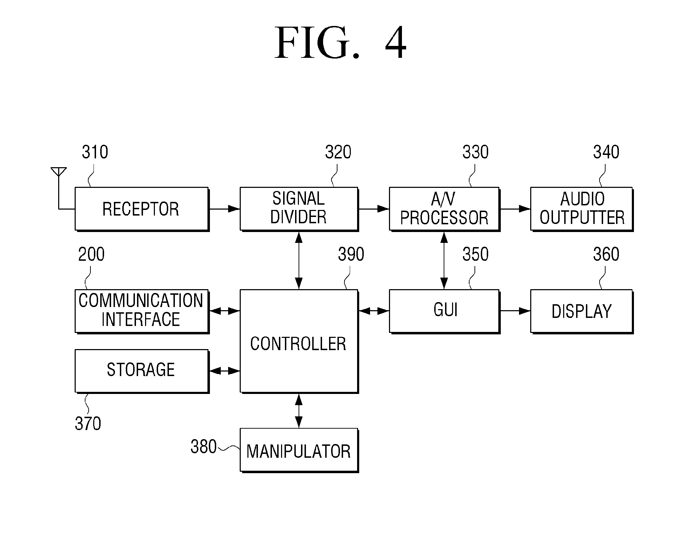

FIG. 4 is a block diagram illustrating the display apparatus of FIG. 1 in detail.

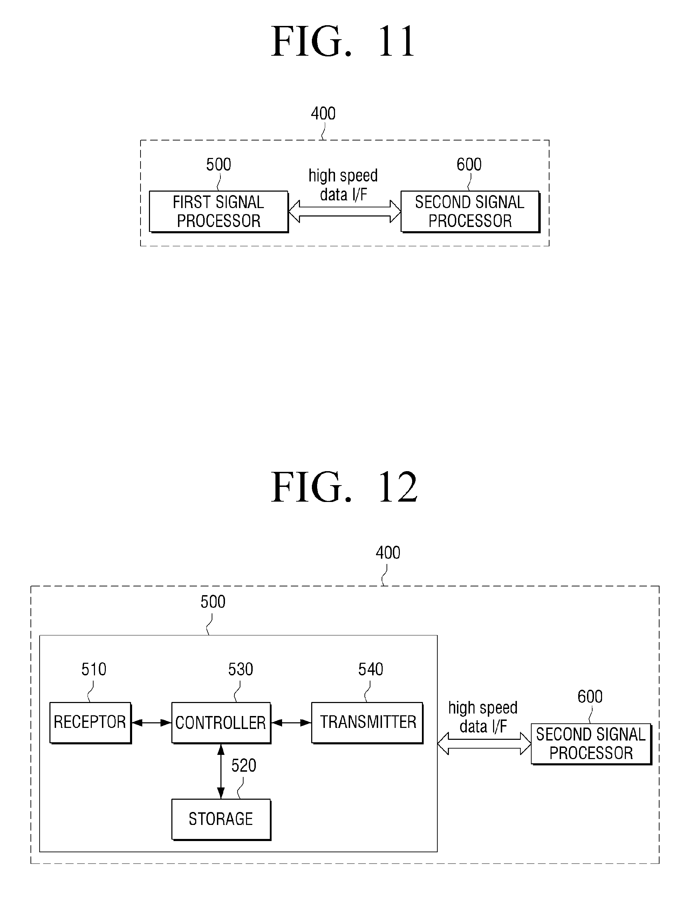

Referring to FIG. 4, the display apparatus 300 according to the exemplary embodiment includes a receptor 310, a signal divider 320, an A/V processor 330, an audio outputter 340, a graphic user interface (GUI) 350, a display 360, a storage 370, a manipulator 380, a controller 390, and a communication interface 200. The receptor 310 and the A/V processor 330 may correspond to a first signal processor 500 and a second signal processor 600, respectively, which will be described later with reference to FIGS. 11 to 13.

The receptor 310 receives a broadcast from a broadcasting station or a satellite in a wired or wireless manner and demodulates the broadcast. Specifically, the receptor 310 may include a tuner (not shown), a demodulator (not shown), and an equalizer (not shown), and may receive a transport stream packet conforming to the MPEG standard from a broadcasting station. The receptor 310 may generate time information for each of the transport stream packets using a system time clock (STC) and transmit a transport stream packet into which the generated time information is inserted and the system time clock to the A/V processor 330. The receptor 310 may transmit the transport stream packet into which the time information is inserted and the system time clock to the A/V processor 330 through a high speed data interface.

The signal divider 320 divides a broadcast signal into a video signal, an audio signal, and an additional information signal. The signal divider 320 transmits the video signal and the audio signal to the A/V processor 330.

The A/V processor 330 performs signal-processing such as video decoding, video scaling, and audio decoding with respect to the video signal and the audio signal input from the signal divider 320, the communication interface 200, and the storage 370. The A/V processor 330 outputs the video signal to the GUI 350 and outputs the audio signal to the audio outputter 340.

The A/V processor 330 performs signal-processing with respect to video data and audio data of the transport stream packet.

Specifically, the A/V processor 330 may divide the transport stream packet into video data and audio data, perform decoding, scaling and frame rate converting with respect to the video data, and convert the video data into video data of a format that can be output by the display 360. The A/V processor 330 may perform signal-processing to amplify the audio data and transmit the audio data to the audio outputter 340.

The A/V processor 330 may detect bit rate information on the transport stream packet to perform signal-processing such as decoding. Specifically, the A/V processor 330 may detect bit rate information on the transport stream packet using the time information included in the transport stream packet received from the receptor 310 and the system time clock. Since the time information included in the transport stream packet is inserted before the transport stream packet is transmitted through the high speed data interface, the A/V processor 330 may detect the bit rate information on the transport stream packet before the bit rate information is changed due to the high speed data interface, that is, the original bit rate information on the transport stream packet received at the receptor 310. The A/V processor 330 may detect the original bit rate information on the transport stream packet as described above, and may perform signal-processing such as decoding using the detected bit rate information.

On the other hand, if the video signal and the audio signal are stored in the storage 370, the A/V processor 330 may output the video signal and the audio signal to the storage 370 in a compressed format.

The audio outputter 340 converts the audio signal output from the A/V processor 330 into sound and outputs the sound through a speaker (not shown) or outputs the sound to an external apparatus connected through the signal processing apparatus 100 through the communication interface 200.

The GUI 350 generates a GUI to be provided to the user. The GUI 350 adds the generated GUI to the image output from the A/V processor 330. The display 360 displays the image to which the GUI is added.

The storage 370 may store image content. Specifically, the storage 370 may receive, image content in which the video data and the audio data are compressed, from the A/V processor 330, and may store the image content. The storage 370 may output the image content to the A/V processor 330 under control of the controller 390. The storage 370 may be realized by a hard disk, a non-volatile memory, or a volatile memory.

The manipulator 380 may be realized by a touch screen, a touch pad, a key button, or a key pad, and provides a user manipulation on a display. Specifically, the user may control the operation of the display apparatus 300 using the manipulator 380. Although the manipulator 380 is provided in the display apparatus 300 in the present exemplary embodiment, the function of the manipulator 380 may be performed by a separate apparatus (for example, a remote controller).

The communication interface 200 is adapted to connect the display apparatus 300 to an external apparatus (not shown), and may be connected to the external apparatus through the above-described signal processing apparatus 100, and also, may access the external apparatus through a LAN and the internet through the signal processing apparatus 100.

The controller or controller 390 controls an overall operation of the display apparatus 300. Specifically, the controller 390 may control the A/V processor 330, the GUI 350, and the display 360 to display an image according to a control command input through the manipulator 380.

If a video signal and/or an audio signal are received from an external apparatus (not shown) through the communication interface 200, the controller 390 may control the A/V processor 330, the audio outputter 340, the GUI 350, and the display 360 to display the video signal and/or the audio signal.

The controller 390 may control the communication interface 200 to provide search information so that an Internet content or Internet information can be searched according to a control command input through the manipulator 380. If a variety of information is received through the communication interface 200, the controller 390 may control the GUI 350 and the display 360 to display the received information.

Since the various input and output ports to be connected to an external apparatus are provided in the external signal processing apparatus, the size and the design of the display apparatus 300 can be changed. That is, the display apparatus 300 can be made lighter, thinner, shorter and smaller.

Although the above-described function is applied to only the display apparatus, which receives and displays a broadcast, in FIG. 4, a signal processing apparatus and a method for processing signals thereof, which will be described later, may be applied to any display apparatus that can display an image.

Also, although the display apparatus 300 includes the receptor 310 to receive a broadcast in FIG. 4, the receptor 310 may be provided in the signal processing apparatus 100 and the broadcast signal may be transmitted to the display apparatus 300 in the serial communication method.

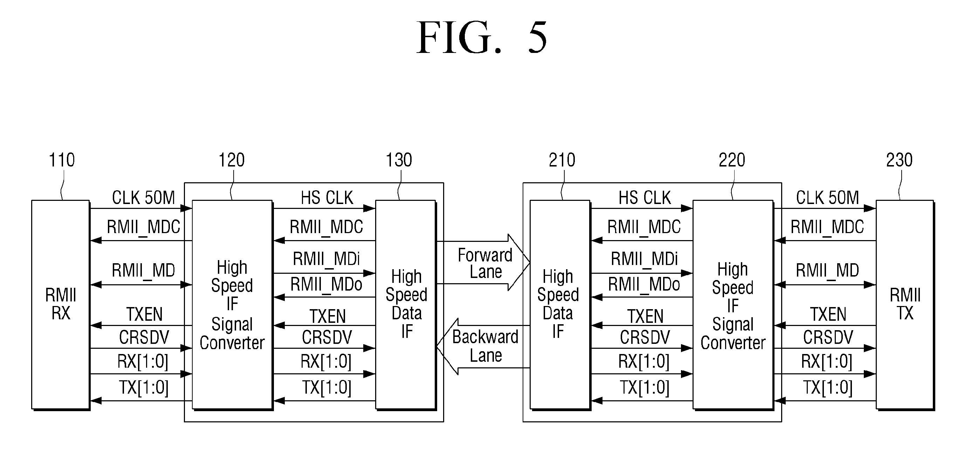

FIG. 5 is a view to explain a signal processing operation of the signal processing apparatus and the communication interface according to the first exemplary embodiment.

Referring to FIG. 5, the physical layer (PHY) device 110 is connected to an external network, and transmits a clock signal, a CRS_DV signal, and a reception data signal (RX[1:0]) to the MAC device 230, receives an RMII_MDS signal, a TXEN signal, and a transmission data signal (TX[1:0]) from the MAC device 230, and exchanges an RMII_MD signal with the MAC device 230.

The converter 120 converts the signal to be transmitted from the PHY device 110 to the MAC device 230 (specifically, the reception data signal (RX[1:0]), the CRS_DV signal, and the RMII_MD signal), temporarily stores the converted signal in the buffer of the predetermined size, and provides the signal temporarily stored to the serial interface 210 of the communication interface 200 through the serial interface 130.

The converter 120 may temporarily store the signals received from the serial interface 130 (specifically, the signals corresponding to the transmission data signal (TX[1:0]), the RMII_MDC signal, the RMII_MDo signal, and the TXEN signal) in the buffer of the predetermined size, may recover the signals temporarily stored (transmission data signal (TX[1:0]), the RMII_MDC signal, the RMII_MDo signal, and the TXEN signal) based on the clock signal of the RMII signal, and may provide the five recovered signals to the PHY device 110.

The converter 120 divides the exchangeable RMII_MD signal into an RMII_MDi signal and an RMII_MDo signal, and transmits the RMII_MDo signal to the communication interface 200 through the serial interface 130 and transmits the RMII_MDi signal to the PHY device 110. A method for identifying whether the RMII_MD signal is a transmission signal or a reception signal is described in the RMII standard and thus a detailed description thereof is omitted.

Accordingly, the serial interface 130 may convert the RMII_MDi signal, the CRS_DV signal, and the reception data signal (RX[1:0]) into a serial signal by multiplexing the signals using a high speed clock signal which is faster than the clock signal of the RMII signal, and may transmit the converted serial signal to the communication interface 200.

The serial interface 130 may receive a serial signal from the communication interface 200, and may de-multiplex the serial signal and transmit various signals corresponding to the RMII_MDC signal, the RMII_MDo signal, the TXEN signal, and the transmission data signal (TX[1:0]) to the converter 120.

The serial interface 210 may receive the serial signal from the signal processing apparatus 100, divide the serial signal into various signals corresponding to the RMII_MDi signal, the CRS_DV signal, and the reception data signal (RX[1:0]) by de-multiplexing the serial signal, and transmit the divided signals to the converter 220.

The serial interface 210 may convert the RMII_DMC signal, the RMII_MDo signal, the TXEN signal, and the transmission data signal (TX[1:0]) into a serial signal by multiplexing the signals using the high speed clock signal which is faster than the clock signal of the RMII signal, and may transmit the converted serial signal to the signal processing apparatus 100.

The converter 220 may divide the exchangeable RMII_MD signal into the RMII_MDi signal and the RMII_MDo signal, and may transmit the RMII_MDi signal to the communication interface 200 through the serial interface 210 and may transmit the RMII_MDo signal to the PHY device 110. The method for identifying whether the RMII_MD signal is a transmission signal or a reception signal is defined in the RMII standard and thus a detailed description thereof is omitted.

The converter 220 may temporarily store the transmission data signal (TX[1:]), the RMII_MDC signal, the RMII_MD signal, and the TXEN signal, which are to be transmitted from the MAC device 230 to the PHY device 110 of the signal processing apparatus 100, in the buffer of the predetermined size, and may transmit the signals temporarily stored to the serial interface 130 of the signal processing apparatus 100 through the serial interface 210.

The converter 220 may temporarily store the plurality of signals received from the serial interface 210 (specifically, the signals corresponding to the RMII_MDC signal, the RMII_Mdo signal, the TXEN signal, and the transmission data signal (TX[1:0])) in the buffer of the predetermined size, may recover the signals temporarily stored to the RMII_MDC signal, the RMII_MDo signal, the TXEN signal, and the transmission data signal (TX[1:0]) based on the clock signal having the same clock frequency as that of the clock signal of the RMII signal, and may transmit the four recovered signals to the MAC device 230.

The MAC device 230 transmits the RMII_MDC signal, the TXEN signal, and the transmission data signal (TX[1:0]) to the PHY device 110, receives the clock signal, the CRS_DV signal, and the reception data signal (RX[1:0]), and exchanges the RMII_MD signal with the PHY device 110.

Hereinafter, a signal processing operation of the signal processing apparatus 100 and the communication interface 200 for each signal will be explained with reference to FIGS. 6 to 8.

FIG. 6 is a view to explain an operation of processing an RX signal of an RMII.

Referring to FIG. 6, the PHY device 110 provides a reception data signal (RX[1:0]) to the converter 120.

The converter 120 stores the reception data signal (RX[1:0]) received from the PHY device 110 in a plurality of transmission first-in first-out (FIFO) buffers 124 in a unit of a size of the transmission FIFO buffer. Specifically, the converter 120 may include a first transmission controller 122, the plurality of transmission FIFO buffers 124, and a multiplexor 126.

The first transmission controller 122 stores the reception data signal (RX[1:0]) received from the PHY device 110 in the plurality of transmission FIFO buffers 124 in the unit of the size of the transmission FIFO buffer only in an on-section of the CRS-DV signal. Specifically, the first transmission controller 122 may store the reception data signal (RX[1:0]) in one transmission FIFO buffer in the on-section of the CRS_DV signal, and may store the reception data signal (RX[1:0]) in another transmission FIFO buffer after having stored the reception data signal in the one transmission FIFO buffer.

The plurality of transmission FIFO buffers 124 may store the reception data signal (RX[1:0]) received from the first transmission controller 122 according to the clock signal of the RMII signal, and may transmit data of the transmission FIFO buffer that has stored the reception data signal to the serial interface 130 through the multiplexor 126 according to a high speed clock signal which is faster than the clock signal of the RMII signal.

Although the two transmission FIFO buffers are used in the present exemplary embodiment, three or more transmission FIFO buffers may be used in practice. Since the reception data signal is transmitted using the plurality of transmission FIFO buffers as described above, async, which may be caused by a frequency difference between the clock signal of the RMII signal and the high speed clock signal of the serial interface 130, can be solved.

Also, since the first transmission controller 122 provides the reception data signal to the plurality of transmission FIFO buffers 124 only in the on-section of the CRS_DV signal, a loss of signals can be prevented even if a clock signal generated in the communication interface 200 (specifically, a clock signal having the same frequency as that of the clock signal of the RMII signal) has a slightly different clock signal from that of the clock signal of the RMII signal.

The serial interface 130 may extract the data of the FIFO buffer that has stored the reception data signal using the high speed clock signal which is faster than the clock signal of the RMII signal, may generate a single serial signal by mixing the extracted data with another RMII signal to be transmitted, and may transmit the generated serial signal to the communication interface 200.

The serial interface 210 receives the serial signal, de-multiplexes the serial signal using the high speed clock signal which is faster than the clock signal of the RMII signal, and provides a signal corresponding to the reception data signal (RX[1:0]) from among the de-multiplexed signals to the converter 220.

The converter 220 stores the signal received through the serial interface 210 in a plurality of reception FIFO buffers 224 in a unit of a size of the reception FIFO buffer size. Specifically, the converter 220 may include a second transmission controller 222, the plurality of reception FIFO buffers 224, a multiplexor 226, and a third transmission controller 228.

The second transmission controller 222 may store the signal received through the serial interface 210 in one reception FIFO buffer according to the high speed clock signal, and may store the received signal in another reception FIFO buffer if the signal has been stored in the one reception FIFO buffer.

The plurality of reception FIFO buffers 224 may store the data signal (RX[1:0]) received from the second transmission controller 222 according to the high speed clock signal which is faster than the clock of the RMII signal, and may transmit data of the FIFO buffer that has stored the reception data to the third transmission controller 228 through the multiplexor 226 according to the clock signal of the RMII signal (specifically, the clock signal generated in the converter 220).

The third transmission controller 228 may recover the reception data signal (RX[1:0]) based on the data stored in the plurality of reception FIFO buffers 224, the CRS_DV signal, and the clock signal of the RMII signal (specifically, the clock signal generated in the converter 220), and may provide the recovered reception data signal (RX[1:0]) to the MAC device 230.

Although the operation of transmitting the CRS_DV signal has not been described in FIG. 6, the CRS_DV signal is a control signal indicating whether the reception data signal includes information, and thus has a low clock frequency. Accordingly, the CRS_DV signal may be transmitted to the communication interface 200 through the serial interface 120 without being converted by the converter 120.

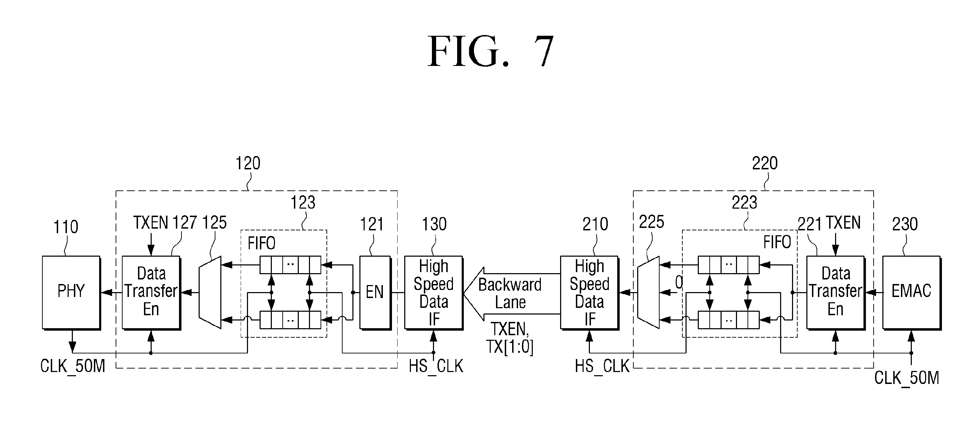

FIG. 7 is a view to explain an operation of processing a TX signal of the RMII.

Referring to FIG. 7, the MAC device 230 provides a transmission data signal (TX[1:0]) to the converter 220.

The converter 220 stores the transmission data signal (TX[1:0]) received from the MAC device 230 in a plurality of transmission FIFO buffers 223 in a unit of a size of the transmission FIFO buffer. Specifically, the converter 220 may include a fourth transmission controller 221, the plurality of transmission FIFO buffers 223, and a multiplexor 225.

The fourth transmission controller 221 stores the transmission data signal (TX[1:0]) received from the MAC device 230 in the plurality of transmission FIFO buffers 223 in the unit of the size of the transmission FIFO buffer only in an on-section of the TEXN signal. Specifically, the fourth transmission controller 221 may store the transmission data signal (TX[1:0]) in one transmission FIFO buffer in the on-section of the TXEN signal, and may store the transmission data signal in another transmission FIFO buffer after having stored the signal in the one transmission FIFO buffer.

The plurality of transmission FIFO buffers 223 may store the transmission data signal (RX[1:0]) received from the fourth transmission controller 221 according to the clock signal of the RMII signal, and may provide data of the transmission FIFO buffer that has stored the transmission data signal (RX[1:0]) to the serial interface 210 through the multiplexor 225 according to the high speed clock signal which is faster than the clock signal of the RMII signal.

Although two transmission FIFO buffers are used in the present exemplary embodiment, three or more transmission FIFO buffers may be used in practice. Since the plurality of transmission FIFO buffers are used as described, async, which may be caused by a frequency difference between the clock signal of the RMII signal and the high speed clock signal of the serial interface 210, can be solved.

Also, since the fourth transmission controller 221 transmits the transmission data signal (RX[1:0]) to the transmission FIFO buffer only in the on-section of the TXEN signal, a loss of signals can be prevented even if a clock signal generated in the communication interface 200 (a clock signal having the same frequency as that of the clock signal of the RMII) has a slightly different clock frequency from that of the clock signal of the RMII signal.

The serial interface 210 may extract the data of the transmission FIFO buffer that has stored the transmission data signal using the high speed clock signal which is faster than the clock signal of the RMII signal, may generate a single serial signal by mixing the extracted data with another RMII signal to be transmitted, and may transmit the generated serial signal to the signal processing apparatus 100.

The serial interface 130 receives the serial signal, de-multiplexes the serial signal using the high speed clock signal which is faster than the clock signal of the RMII signal, and provides a signal corresponding to the transmission data signal (TX[1:0]) from among the de-multiplexed signals to the converter 120.

The converter 120 stores the signal received through the serial interface 130 in a plurality of reception FIFO buffers 123 in a unit of a size of the reception FIFO buffer. Specifically, the converter 120 may include a fifth transmission controller 121, the plurality of reception FIFO buffers 123, a multiplexor 125, and a sixth transmission controller 127.

The fifth transmission controller 121 stores the signal received through the serial interface 130 in one reception FIFO buffer according to the high speed clock signal, and, if the signal has been stored in the corresponding reception FIFO buffer, may store the received signal in another reception FIFO buffer.

The plurality of reception FIFO buffers 123 may store the transmission data signal (TX[1:0]) received from the fifth transmission control signal 121 according to the high speed clock signal which is faster than the clock signal of the RMII signal, and may transmit data of the FIFO buffer that has stored the data signal to the sixth transmission controller 127 through the multiplexor 125 according to the clock of the RMII signal.

The sixth transmission controller 127 recovers the transmission data signal (TX[1:0]) based on the data stored in the plurality of reception FIFO buffers 123, the received TXEN signal, and the clock signal of the RMII signal, and provides the recovered transmission data signal (TX[1:0]) to the PHY device 110.

Although the operation of transmitting the TXEN signal has not been described in FIG. 7, the TXEN signal is a control signal indicating whether the transmission data signal (TX[1:0]) includes information or not, and thus has a low clock frequency. Accordingly, the TXEN signal may be converted into a serial signal through the serial interface 210 without going through a converting process of the converter 220 and may be transmitted to the signal processing apparatus 100.

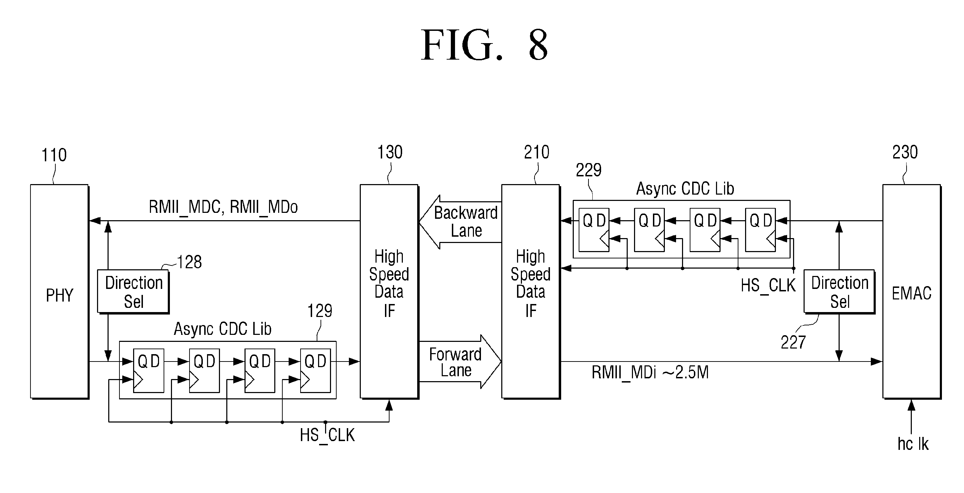

FIG. 8 is a view to explain an operation of processing an RMII_MDC signal and an RMII_MD signal of the RMII.

Referring to FIG. 8, the PHY device 110 receives an RMII_MDC signal and exchanges an RMII_MD signal.

The converter 120 identifies whether the RMII_MD signal is an RMII_MDo signal or an RMII_MDi signal, and, if the RMII_MD signal is an RMII_MDi signal to be transmitted to the MAC device 230, stores the RMII_MDi signal in an async buffer 129 to prevent async of the RMII_MDi signal and provides the stored RMII_MDi signal to the serial interface 130.

Although the async buffer 129 is realized using four D-flip flops in the present exemplary embodiment, the async buffer 129 is not limited thereto and a different async buffer may be used in practice.

If the RMII_MD signal is an RMII_MDo signal, the converter 120 may provide a signal received through the serial interface 130 to the PHY device 110 as the RMII_MD signal.

The serial interface 130 may extract the RMII_MDi signal stored in the async buffer 129 using the high speed clock signal which is faster than the clock signal of the RMII signal, may generate a single serial signal by mixing the extracted signal with another RMII signal to be transmitted, and may transmit the serial signal to the communication interface 200.

The serial interface 130 may receive a serial signal from the communication interface 200, may de-multiplex the serial signal using the high speed clock signal which is faster than the clock signal of the RMII signal, may provide a signal corresponding to the RMII_MDC from among the de-multiplexed signals to the PHY device 110, and may provide a signal corresponding to the RMII_MDo from among the de-multiplexed signals to the PHY device 110.

The serial interface 210 receives the serial signal, de-multiplexes the serial signal using the high speed clock signal which is faster than the clock signal of the RMII signal, and provides a signal corresponding to the RMII_MDi from among the de-multiplexed signals to the MAC device 230 as the RMII_MD signal.

The serial interface 130 may extract the RMII_MDo signal stored in the async buffer 229 using the high speed clock signal which is faster than the clock signal of the RMII signal, may generate a single serial signal by mixing the extracted signal with another RMII signal to be transmitted, and may transmit the single serial signal to the signal processing apparatus 100.

The converter 220 identifies whether the RMII_MD signal is an RMII_MDo signal or an RMII_MDI signal, and, if the RMII_MD signal is an RMII_MDo signal to be transmitted to the PHY device 110, stores the RMII_MDo signal in an async buffer 229 to prevent async of the RMII_MDo signal, and provides the stored RMII_MDo signal to the serial interface 210. Although the async buffer 229 is realized using four D-flip flops in the present exemplary embodiment, the async buffer 229 is not limited thereto and a different async buffer may be used in practice.

If the RMII_MD signal is an RMII_MDi signal, the converter 220 may provide a signal received through the serial interface 210 to the MAC device 230 as the RMII_MD signal.

The MAC device 230 transmits the RMII_MDC signal and exchanges the RMII_MD signal.

Although the operation of transmitting the RMII_MDC signal has not been described in FIG. 8, the RMII_MDC signal has a low clock frequency. Accordingly, the RMII_MDC signal may be converted into a serial signal through the serial interface 210 without going through a converting process of the converter 220 and may be transmitted to the signal processing apparatus 100.

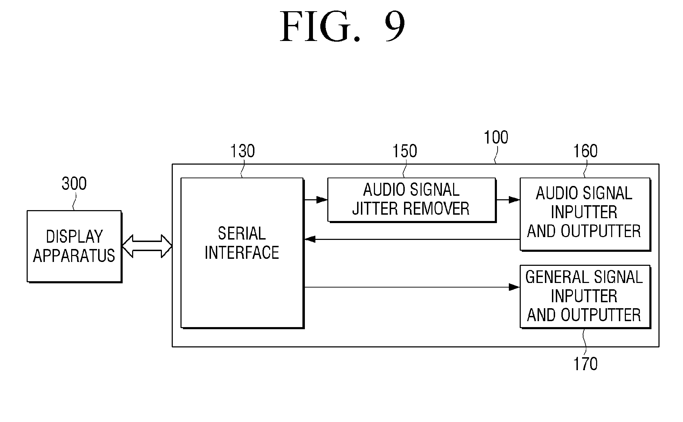

FIG. 9 is a block diagram illustrating a signal processing apparatus according to a third exemplary embodiment.

As shown in FIG. 9, a signal processing apparatus 100 includes a serial interface 130, an audio signal jitter remover 140, an audio signal inputter and outputter 150, and a general signal inputter and outputter 160.

The serial interface 130 converts audio data of a plurality of data transmitted from the display apparatus 300 into an I2S signal including a plurality of clock signals. The serial interface 130 may convert the I2S signal including the plurality of clock signals into a signal of a serial communication method in order to transmit the I2S signal to the external display apparatus 300. The plurality of clock signals included in the I2S signal may include an MCLK signal, a BCLK signal, and an LRCLK signal.

The serial interface 130 may be realized by an USB interface, but this is merely an example and the serial interface 130 may be realized by other high speed data interfaces.

The audio signal jitter remover 140 generates a new master clock signal (MCLK) using the plurality of clock signals to remove a jitter component of the I2S signal. Specifically, the audio signal jitter remover 140 generates a new MCLK using the BCLK signal, the LRCLK signal, and the MCLK signal transmitted from the display apparatus 300.

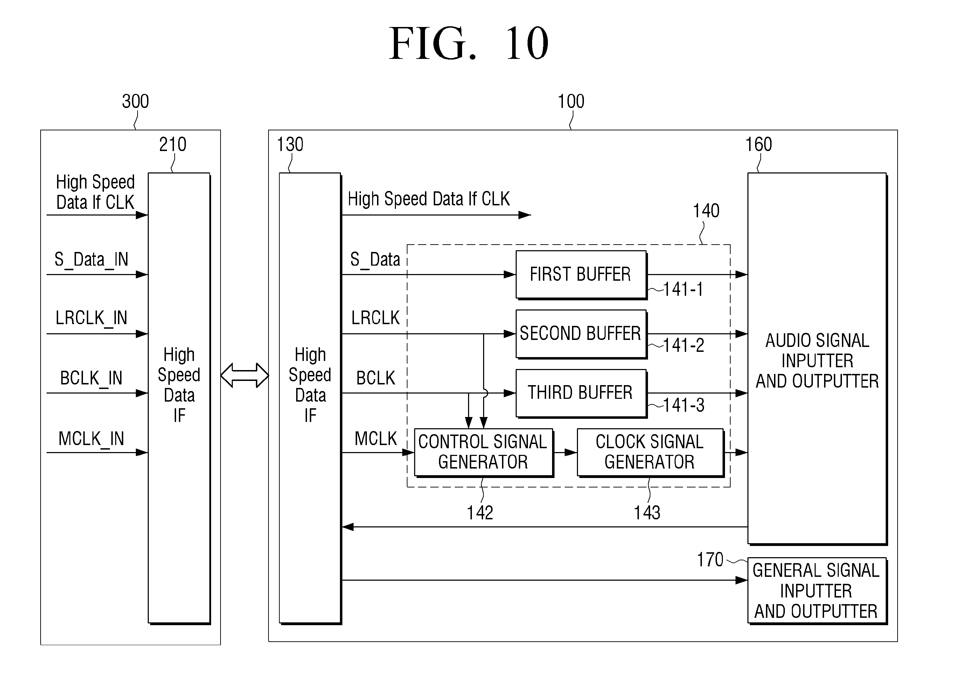

More specifically, the audio signal jitter remover 140 generates a new MCLK in which at least one of a period and a phase of an MCLK signal frequency is adjusted to be synchronized with the BCLK signal and the LRCLK signal. A detailed constitution of the audio signal jitter remover 140 will be explained below with reference to FIG. 10.

The audio signal inputter and outputter 150 receives an audio signal to transmit it to the display apparatus 300. The audio signal inputter and outputter 150 signal-processes the audio signal from which the jitter component is removed by the audio signal jitter remover 140 using a digital-analogue converter (DAC), and outputs the audio signal to an external apparatus (for example, a speaker).

The general signal inputter and outputter 160 may receive a video signal, a control signal, and an additional signal to transmit them to the display apparatus 300 through the serial interface 130, and may output a video signal, a control signal, and an additional signal transmitted from the display apparatus 300 through the serial interface 130 to an external apparatus.

Hereinafter, the audio signal jitter remover 140 will be explained in detail with reference to FIG. 10. The serial interface 130, the audio signal inputter and outputter 150, and the general signal inputter and outputter 160 shown in FIG. 10 are the same as those of FIG. 9, and thus a detailed description thereof is omitted.

As shown in FIG. 10, the audio signal jitter remover 140 includes first to third buffers 141-1, 141-2, and 141-3, a control signal generator 142, and a clock signal generator 143.

The first to the third buffers 141-1, 141-2, and 141-3 temporarily store the BCLK signal, the LRCLK signal, and the S_DATA signal of the I2S signal converted by the serial interface 130. Specifically, the first buffer 151-1 temporarily stores the S_DATA signal, the second buffer 141-2 temporarily stores the LRCLK signal, and the third buffer 141-3 temporarily stores the BCLK signal. However, although the buffers corresponding to the plurality of signals are provided in the present exemplary embodiment, the BCLK signal, the LRCLK signal, and the S_DATA signal may be temporarily stored in a single buffer.

The first to the third buffers 141-1, 141-2, and 141-3 may be buffers of a FIFO method.

The first to the third buffers 141-1, 141-2, and 141-3 output the BCLK signal, the LRCLK signal, and the S_DATA signal temporarily stored therein according to the new master clock (MCLK) signal.

The control signal generator 142 generates a control signal to generate the new MCLK signal using the LRCLK signal, the BCLK signal, and the MCLK signal. Specifically, the control signal generator 142 compares a frequency of the LRCLK signal, a frequency of the BCLK signal, and a frequency of the MCLK signal.

If the frequency of the MCLK signal is not synchronized with the frequency of the LRCLK signal and the frequency of the BCLK signal due to a high speed data IF clock signal, the control signal generator 142 generates a control signal to control the clock signal generator 143 to generate a new MCLK signal in which at least one of a phase and a period of the frequency of the MCLK signal is changed to be synchronized with the LRCLK signal and the BCLK signal.

For example, the control signal generator 142 may generate a control signal to control the clock signal generator 143 to generate a new MCLK signal in which a phase of the existing MCLK signal is changed, so that a point of time when the LRCLK signal and the BCLK signal are high can be synchronized with a point of time when the MCLK signal is high, and a point of time when the LRCLK signal and the BCLK signal are low can be synchronized with a point of time when the MCLK signal is low.

Also, the control signal generator 142 may generate a control signal to control the clock signal generator 143 to generate a new MCLK signal in which a period of the existing MCLK signal is changed, so that a period of the MCLK signal is N-times longer than a period of the LRCLK signal and the BCLK signal (N is an integer).

The control signal generator 142 outputs the generated control signal to the clock signal generator 143.

The clock signal generator 143 generates a new MCLK signal according to the control signal generated by the control signal generator 142. At this time, the clock signal generator 143 may generate a new MCLK signal using a local oscillator (for example, a crystal clock generator) and a pullable phase locked loop (PLL).

Since the signal processing apparatus 100 can transmit the plurality of data such as audio data, video data, and control data through a single cable as described, it is easy to manage the design of the exterior of the display apparatus, and the jitter component of the audio signal is removed so that sound quality does not deteriorate.

FIG. 11 is a block diagram illustrating a display apparatus according to another exemplary embodiment.

According to another exemplary embodiment, a display apparatus 400 receives a transport stream packet according to the MPEG standard, signal-processes the transport stream packet, and provides a moving image or a still image to a user.

The display apparatus 400 performing the above function may be, but not limited to, a television (TV). However, any apparatus that can receive and process a transport stream packet such as a set-top box or a mobile terminal may be the display apparatus 400.

As shown in FIG. 11, the display apparatus 400 includes a first signal processor 500 and a second signal processor 600. For example, the first signal processor 500 includes a tuner (not shown) to receive a transport stream packet conforming to the MPEG standard from a broadcasting station, and the second signal processor 600 may include a decoder (not shown) to decode the transport stream packet.

As described above, in the display apparatus 400 according to another exemplary embodiment, an element to receive a transport stream packet and an element to decode the transport stream packet may be provided in separate chips.

The first signal processor 500 and the second signal processor 600 may be connected to each other through a high speed data interface. For example, the high speed data interface (or a high speed network interface) may be the IEEE 1394 which provides a bandwidth in which the transport stream packet conforming to the MPEG standard can be transmitted. However, this should not be considered as limiting and any interface that can provide a bandwidth in which the transport stream packet conforming to the MPEG standard can be transmitted may be the high speed data interface of the present exemplary embodiment.

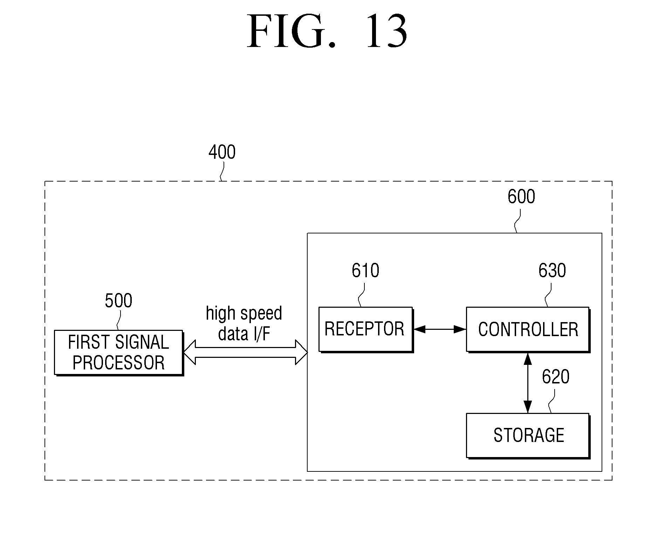

Hereinafter, the first signal processor 500 and the second signal processor 600 will be explained in detail with reference to FIGS. 12 and 13.

FIG. 12 is a block diagram illustrating the first signal processor 500 according to another exemplary embodiment.

Referring to FIG. 12, the first signal processor 500 generates time information for each of the transport stream packets using a system time clock (STC), and transmits a transport stream packet to which the time information is inserted and the system time clock. To achieve this, the first signal processor 500 includes a receptor 510, a storage 520, a controller 530, and a transmitter 540 as shown in FIG. 12.

The receptor 510 receives a transport stream packet. Specifically, the receptor 510 may receive a transport stream conforming to the MPEG standard from a broadcasting station using a broadcast network. In this case, the receptor 510 may include a tuner (not shown), a demodulator (not shown), and an equalizer (not shown).

The storage 520 stores the transport stream packets in sequence. Specifically, the storage 520 may be realized by a memory or a hard disk drive, and may store the transport stream packets in sequence in the order of receiving the transport stream packets from the receptor 510.

The controller 530 controls an overall operation of the first signal processor 500. Specifically, the controller 530 may control the receptor 510 to receive the transport stream packet and store the transport stream packets in the storage 520 in the order of receiving the transport stream packets.

In this case, the controller 530 generates time information for each of the transport stream packets using the system time clock, and inserts the time information into a corresponding transport stream packet and stores the transport stream packet.

The system time clock may be obtained by a counter (not shown), which counts a clock signal of a predetermined frequency (for example, 27 MHz). The controller 530 may count a point of time when the transport stream packet is received using the counter, and may insert the counted value to the corresponding transport stream packet and store the transport stream packet.

For example, if the counter counts value 'A' at a point of time when a first transport stream packet is received through the receptor 510, 'A' may be inserted into a header area of the first transport stream packet and the first transport stream packet may be stored in the storage 520. If the counter counts value 'B' at a point of time when a second transport stream packet is received after the first transport stream packet, 'B' may be inserted into a header area of the second transport stream packet and the second transport stream packet may be stored in the storage 520.

The system time clock recited herein may be a system time clock that has been corrected based on program clock reference (PCR) information included in the transport stream packet.

The broadcasting station adds a value that is obtained by sampling a system time clock at a predetermined time interval to a transport stream packet, and transmits the transport stream packet. Herein, the sampled value is PCR information. In order to decode and output the transport stream packet received from the broadcasting station normally, the display apparatus 400 synchronizes a system time clock of the display apparatus 400 with a system clock of the broadcasting station using the PCR information transmitted from the broadcasting station. That is, the controller 530 may detect an error between the system time clock of the display apparatus 400 and the PCR information detected from the transport stream packet, may correct the system time clock of the display apparatus 400 using the detected error, and may synchronize the system time clock of the display apparatus 400 with the system clock of the broadcasting station.

The controller 530 may control to detect time information, that is, a point of time when the transport stream packet is received, based on the corrected system time clock, insert the detected time information into the corresponding transport stream packet, and store the transport stream packet in the storage 520.

The transmitter 540 transmits the transport stream packet into which the time information is inserted and the system time clock to the second signal processor 600. Specifically, the transmitter 540 may transmit the transport stream packet into which the time information is inserted and the system time clock to the second signal processor 600 through a high speed data interface. The system time clock may be a system time clock that has been corrected based on the PCR information detected from the transport stream packet.

FIG. 13 is a block diagram illustrating the second signal processor 600 according to another exemplary embodiment. The second signal processor 600 may receive the transport stream packet into which the time information is inserted and the system time clock, and may process the transport stream packet. To achieve this, the second signal processor 600 includes a receptor 610, a storage 620, and a controller 630 as shown in FIG. 13.

The receptor 610 receives the transport stream packet into which the time information is inserted and the system time clock. Specifically, the receptor 610 may receive the transport stream packet into which the time information is inserted and the system time clock from the first signal processor 500 through the high speed data interface. The system time clock may be a system time clock that has been corrected based on PCR information detected from the transport stream packet.

The storage 620 stores the transport stream packets in sequence. Specifically, the storage 620 may be realized by a memory or a hard disk drive, and may store the transport stream packets in sequence in the order of receiving the transport stream packets through the receptor 610.

The controller 630 controls an overall operation of the second signal processor 600. Specifically, the controller 630 may control the receptor 610 to receive the transport stream packet and store the transport stream packets in the storage 620 in the order of receiving the transport stream packets.

In particular, the controller 630 may detect bit rate information on the transport stream packet using the time information included in the transport stream packet stored and the system time clock. The bit rate information detected by the controller 630 may be bit rate information on the transport stream packet received from the first signal processor 500. That is, even if the bit rate of the transport stream packet is changed by the high speed data interface, the controller 630 can detect the bit rate of the transport stream packet before being changed.

Specifically, the controller 630 calculates a receiving time difference between the transport stream packets using the time information included in the transport stream packet and the system time clock, and calculates the receiving time difference and a size of the transport stream packet, thereby detecting the bit rate information on the transport stream packet. The size of the transport stream packet may be 188 bytes according to the MPEG standard.

For example, the first signal processor 500 receives a first transport stream packet and a second transport stream packet in sequence from the broadcasting station, and "A" and "B", respectively counted at a point of the reception, are inserted into the respective transport stream packet so as to be transmitted to the second signal processor 600 along with the system time clock.

In this case, the controller 630 calculates a receiving time difference between the time information "A" and the time information "B" of the first signal processor 500 using the time information "A" inserted into the first transport stream packet, the time information "B" inserted into the second transport stream packet and the received system time clock received from the first signal processor 500. In addition, the controller 630 divides a 188 byte, a size of a transport stream packet, by the calculated time difference so as to detect bit rate information on the transport stream packet.

As described above, the controller 630 uses time information, inserted into the first signal processor 500, and a system time clock in order to detect bit rate information on a transport stream packet and thus, the controller 630 can detect a bit rate of a transport stream packet received from a broadcast station, regardless of a high-speed interface.

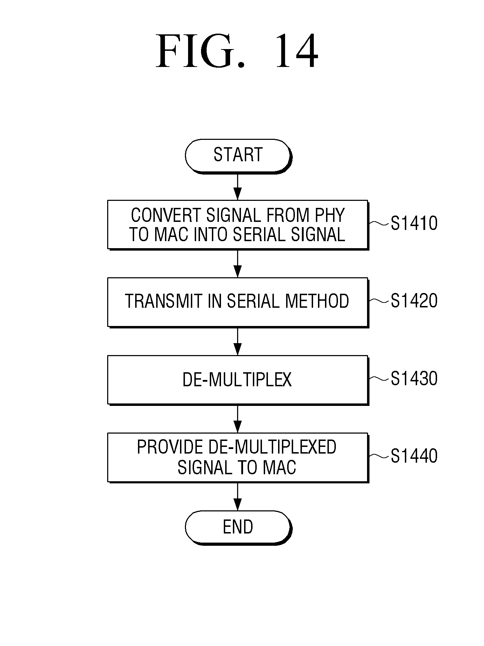

FIG. 14 is a flowchart illustrating a method for processing signals from a physical layer to a MAC according an exemplary embodiment.

Referring to FIG. 14, a plurality of signals to be transmitted from a physical layer (PHY) to a media access control (MAC) is converted into a single serial signal (S1410). Specifically, the plurality of signals may be temporarily stored in a buffer and the plurality of signals temporarily stored in the buffer may be converted into a single serial signal by multiplexing the signals using a high speed clock signal which is faster than a clock signal of an RMII signal. At this time, the plurality of signals to be transmitted from the PHY to the MAC may be two reception data signals, a CRS_DV signal and an RMII_MD signal of the RMII signal.

The converted serial signal is transmitted using a serial interface (S1420).

The transmitted serial signal is de-multiplexed into a plurality of signals (S1430). Specifically, the transmitted serial signal may be recovered to the two reception data signals, the CRS_DV signal and the RMII_MD signal.

The plurality of signals de-multiplexed are provided to the MAC (S1440).

Accordingly, since the signal processing method according to the exemplary embodiment exchanges the RMII signal in a serial communication method, it can exchange the RMII signal easily through a single cable. Also, the signal processing method of FIG. 14 may be executed on the display system having the constitution of FIG. 1 and may be executed on the other display apparatuses.

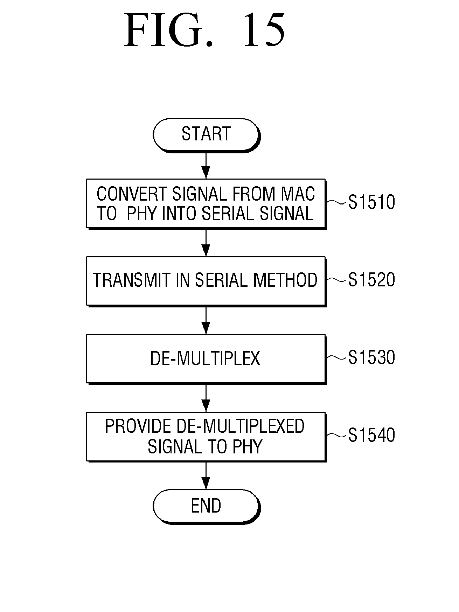

FIG. 15 is a flowchart illustrating a method for processing signals from a MAC to a PHY according to an exemplary embodiment.

Referring to FIG. 15, a plurality of signals to be transmitted from a MAC to a PHY is converted into a single serial signal (S1510). Specifically, the plurality of signals may be temporarily stored in a buffer and the plurality of signals temporarily stored in the buffer may be converted into a single serial signal by multiplexing the signals using a high speed clock signal which is faster than a clock signal of an RMII signal. At this time, the plurality of signals to be transmitted from the MAC to the PHY may be two transmission data signals, an RMII_MDC signal, an RMII_MD signal, and a TXEN signal of the RMII signal.

The converted serial signal is transmitted to a serial interface (S1520).

The transmitted serial signal is de-multiplexed into a plurality of signals (S1530). Specifically, the transmitted serial signal may be recovered to the two transmission data signals, the RMII_MDC signal, the RMII_MD signal, and the TXEN signal.

The plurality of signals de-multiplexed are provided to the PHY (S1540).

Accordingly, since the signal processing method according to the exemplary embodiment exchanges the RMII signal in a serial communication method, it can exchange the RMII signal easily using a single cable. The signal processing method of FIG. 15 may be executed on the display system having the constitution of FIG. 1 or may be executed on the other display apparatuses.

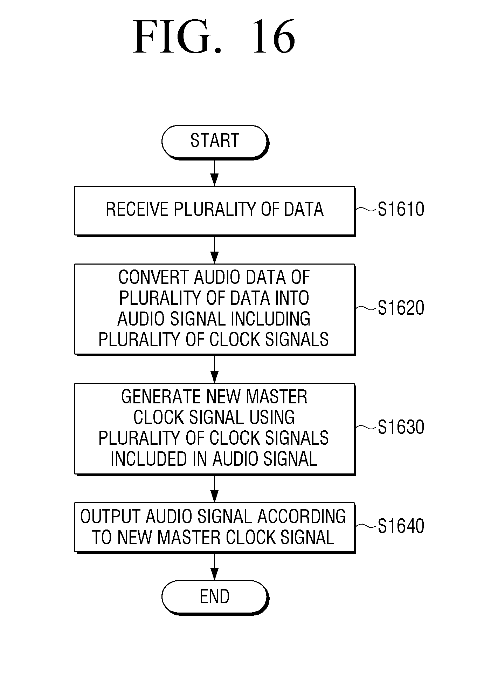

Hereinafter, a method for processing an audio signal of the signal processing apparatus 100 according to an exemplary embodiment will be explained with reference to FIG. 16.

The signal processing apparatus 100 receives a plurality of data from the display apparatus 300 (S1610). The signal processing apparatus 100 may receive the plurality of data through a single cable using the serial interface 130. The plurality of data may include audio data, video data, and control data.

The signal processing apparatus 100 converts the audio data of the plurality of data into an audio signal including a plurality of clock signals (S1620). Specifically, the signal processing apparatus 100 may convert an audio signal of a serial communication method into an I2S signal including a plurality of clock signals. The I2S signal may include an S_DATA signal, a LRCLK signal, a BCLK signal, and an MCLK signal.

The signal processing apparatus 100 generates a new master clock (MCLK) signal using the plurality of clock signals included in the converted audio signal (S1630). Specifically, the signal processing apparatus 100 may temporarily store the BCLK signal, the LRCLK signal, and the S_DATA signal of the converted I2S signal in a buffer. The signal processing apparatus 100 generates a control signal to generate a new MCLK signal using the LRCLK signal, the BCLK signal, and the MCLK signal. The signal processing apparatus 100 generates a new MCLK signal in which at least one of a phase and a period of the existing MCLK signal is changed according to the control signal.

The signal processing apparatus 100 outputs the audio signal according to the new master clock (MCLK) signal (S1640). Specifically, the signal processing apparatus 100 may output the S_DATA signal, the LRCLK signal, and the BCLK signal temporarily stored in the buffer according to the new master clock (MCLK) signal.

According to the method for processing the audio signal described above, the plurality of data such as audio data, video data, and control data can be transmitted through a single cable and thus it is easy to manage the design of the exterior of the display apparatus, and, since a jitter component of the audio signal is removed, sound quality does not deteriorate.

Although the signal processing apparatus 100 includes the audio signal jitter remover 140 to remove a jitter component of an audio signal in the above exemplary embodiment, this is merely an example and the display apparatus 300 may include the audio signal jitter remover 140 to remove a jitter component of an audio signal output from the signal processing apparatus 100.

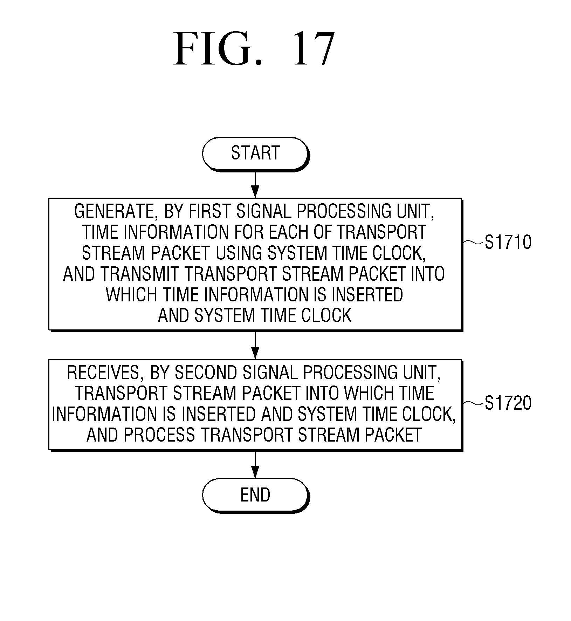

FIG. 17 is a flowchart to explain a method for processing a transport stream packet according to an exemplary embodiment. Specifically, a method for processing a transport stream packet of a display apparatus which includes a first signal processor and a second signal processor will be explained.

The first signal processor generates time information for each transport stream packet using a system time clock, and transmits a transport stream packet into which the time information is inserted and the system time clock (S1710).

Specifically, the first signal processor may receive transport stream packets and may store the transport stream packets in sequence. The first signal processor may generate time information for each of the transport stream packets using a system time clock, may insert the time information into a corresponding transport stream packet, and may store the transport stream packet.

The transport stream packet into which the time information is inserted and the system time clock may be transmitted to the second signal processor. The transport stream packet into which the time information is inserted and the system time clock may be transmitted to the second signal processor through a high speed data interface.

The system time clock may be a system time clock that has been corrected based on program clock reference (PCR) information included in the transport stream packet.

The second signal processor receives the transport stream packet into which the time information is inserted and the system time clock, and processes the transport stream packet (S1720). Specifically, the second signal processor receives the transport stream packet into which the time information is inserted and the system time clock, and stores the transport stream packets in sequence. The second signal processor may detect bit rate information on the transport stream packet using the time information included in the transport stream packet and the system time clock.

Since the exemplary embodiments have been described above, overlapped explanation and illustration are omitted.

According to the exemplary embodiment, since the bit rate information on the transport stream packet is detected using the transport stream packet into which the time information is inserted and the system time clock received from the first signal processor, the bit rate on the transport stream packet before being change can be detected even if the bit rate is changed due to the high speed data interface.

A program to perform the method according to the above-described exemplary embodiments may be stored and used in a variety of recording media.

Specifically, a code to perform the above-described methods may be stored in various types of recording media readable by a terminal apparatus, such as a random access memory (RAM), a flash memory, a read only memory (ROM), an erasable programmable ROM (EPROM), an electronically erasable and programmable ROM (EEPROM), a register, a hard disk, a removable disk, a memory card, a USB memory, and a CD-ROM.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A signal processing apparatus which is connectible to a display apparatus, the signal processing apparatus comprising:
a physical layer device which is connected to an external network;
a serial interface which connects the physical layer device and the display apparatus; and
a converter which converts a first signal to be transmitted from the physical layer device to a medium access control (MAC) device of the display apparatus and provides the first signal to the serial interface, and converts a second signal received through the serial interface and provides the second signal to the physical layer device.

2. The signal processing apparatus as claimed in claim 1, wherein the converter converts the first signal to be transmitted from the physical layer device to the MAC device of the display apparatus, temporarily stores the converted first signal in a buffer of a predetermined size, and provides the temporarily stored first signal to the MAC device through the serial interface.

3. The signal processing apparatus as claimed in claim 2, wherein the serial interface multiplexes the first signal temporarily stored in the buffer of the converter using a high speed clock signal which is faster than a clock signal of a reduced media independent interface (RMII) signal, and transmits the multiplexed first signal to the display apparatus.

4. The signal processing apparatus as claimed in claim 1, wherein the physical layer device transmits two reception data signals, a carrier sense data valid (CRS_DV) signal, and a reduced media independent interface _ management data (RMII_MD) signal to the MAC device, and receives two transmission data signals, a reduced media independent interface _ management data clock (RMII_MDC) signal, and a reduced media independent interface _ management data (RMII_MD) signal, and a transmit enable (TXEN) signal from the MAC device.

5. The signal processing apparatus as claimed in claim 4, wherein the converter comprises a plurality of transmission first in first out (FIFO) buffers and stores the two reception data signals in the plurality of transmission FIFO buffers in a unit of a size of the transmission FIFO buffer,
wherein the serial interface extracts data of the FIFO buffer that has stored the two reception data signals using a high speed clock signal which is faster than a clock signal of an RMII signal.

6. The signal processing apparatus as claimed in claim 5, wherein the converter stores the two reception data signals in the transmission FIFO buffer only in an on-section of the CRS_DV signal.

7. The signal processing apparatus as claimed in claim 4, wherein the converter divides the RMII_MD signal into an RMII_MDi signal to be transmitted to the MAC device and an RMII_MDo signal to be received from the MAC device, and provides the RMII-MDI signal to the serial interface.

8. The signal processing apparatus as claimed in claim 4, wherein the converter comprises a plurality of reception FIFO buffers,
wherein the serial interface stores a serial signal corresponding to the two transmission data signals in the plurality of reception FIFO buffers in a unit of a size of the reception FIFO buffer,
wherein the converter recovers the two transmission data signals based on data stored in the reception FIFO buffer, a clock signal of the RMII signal, and the TXEN signal, and provides the two recovered transmission data signals to the physical layer device.

9. The signal processing apparatus as claimed in claim 4, wherein, if a serial signal corresponding to the RMII_MDo signal is received, the converter provides the received serial signal to the physical layer device as the RMII_MD signal.

10. The signal processing apparatus as claimed in any one of claims 1 to 9, further comprising a signal inputter and outputter which inputs and outputs at least one of a video signal, an audio signal, and a control signal to be input and output from an external apparatus to the display apparatus,
wherein the serial interface provides at least one of the video signal, the audio signal, and the control signal to the display apparatus.

11. A method for processing signals between a physical layer and a media access control (MAC) to access a communication network of a display apparatus, the method comprising:
converting a plurality of signals to be transmitted from the physical layer to the MAC into a single serial signal;
transmitting the converted serial signal to a serial interface;
de-multiplexing the transmitted serial signal into a plurality of signals; and
providing the plurality of signals de-multiplexed to the MAC.

12. The method as claimed in claim 11, wherein the plurality of signals to be transmitted from the physical layer to the MAC are two reception data signals, a carrier sense _ data valid (CRS_DV) signal, and a reduced media independent interface _ management data (RMII_MD) signal of the RMII signal.

13. The method as claimed in claim 11, wherein the converting comprises temporarily storing the plurality of signals in a buffer and converting the plurality of signals temporarily stored in the buffer into a single serial signal by multiplexing the plurality of signals using a high speed clock signal which is faster than a clock signal of the RMII signal.

14. The method as claimed in claim 13, wherein the MAC is provided in the display apparatus, and the physical layer is provided in an apparatus which is separated from the display apparatus.
